# EUROPÄISCHE PATENTSCHRIFT

(11) **EP 0 987 543 B1**
(45) Veröffentlichungstag und Bekanntmachung des Hinweises auf die Patenterteilung: **26.06.2002**
(21) Anmeldenummer: 99118255.1
(22) Anmeldetag: 14.09.1999
(51) Int. Cl.: G01N 23/20, G01N 23/223, B01L 3/02, H01J 49/04

(54) **Halterungsvorrichtung für partikelförmige Materialproben**
Holder for particle shaped sample
Monture pour echantillon de materiau particulaire

(30) Priorität: 18.09.1998 DE 19842797
(43) Veröffentlichungstag der Anmeldung: 22.03.2000
(73) Patentinhaber: Max-Planck-Gesellschaft zur Förderung der Wissenschaften e.V., 80539 München (DE)
(72) Erfinder: Kiefersauer, Reiner Albert, Dr., 80634 München (DE); Huber, Robert, Prof.Dr., 82110 Germering (DE)
(74) Vertreter: Hertz, Oliver, Dr.

(56) Entgegenhaltungen:
- US-A- 4 933 548
- KIEFERSAUER R ET AL: "PROTEIN-CRYSTAL DENSITY BY VOLUME MEASUREMENT AND AMINO-ACID ANALYSIS" JOURNAL OF APPLIED CRYSTALLOGRAPHY,DK,COPENHAGEN, Bd. 29, Nr. 4, 1996, Seiten 311-317, XP000866399 ISSN: 0021-8898
- HOPE H: "CRYOCRYSTALLOGRAPHY OF BIOLOGICAL MACROMOLECULES: A GENERALLY APPLICABLE METHOD" ACTA CRYSTALLOGRAPHICA,DK,MUNKSGAARD, COPENHAGEN, Bd. 44, 1988, Seiten 22-26, XP000869580 ISSN: 0365-110X

## Beschreibung

Die Erfindung betrifft eine Halterungsvorrichtung für partikelförmige Materialproben, insbesondere eine Probenhalterung für Partikel mit einem hohen Flüssigkeitsgehalt, wie zum Beispiel Proteinkristalle.

Die Proteinkristallographie ist ein Verfahren zur Strukturanalyse von Proteinen, bei dem diese in einem kristallisierten Zustand einer Röntgen- oder Synchrotronbestrahlung ausgesetzt werden, um aus Beugungsbildern auf die Molekülstruktur Rückschlüsse zu ziehen. Wegen der Größe und unregelmäßigen Form der Proteinmoleküle sind Proteinkristalle durch sehr geringe Gitterkräfte und einen hohen Lösungsmittelgehalt gekennzeichnet, der im Bereich von 30% bis 70%, oder sogar bis zu 90%, liegen kann. Proteinkristalle sind daher instabil und auf charakteristische Kristallgrößen im Bereich von 0.003 mm bis 1 mm beschränkt. Die Instabilität äußert sich insbesondere im Verlust der Kristallstruktur, sobald der Kristall bei Raumtemperatur einen Lösungsmittelverlust durch Wasserentzug erfährt.

Es ist allgemein bekannt, die Proteinkristalle zur Erzielung einer ausreichenden Stabilität während der Strukturanalyse in einer geschlossenen Kapillare unter Anwesenheit freien Lösungsmittels zu messen. In der Kapillare bildet sich eine nahezu gesättigte Lösungsmittelatmosphäre aus, die ein Austrocknen der Kristallite verhindert. Diese Technik ist nachteilig, da die Kristallite in den Kapillaren schlecht handhabbar sind und da Tieftemperaturbehandlungen zum Schutz vor Strahlenschäden im Proteinkristall während der Strukturanalyse, wie sie beispielsweise in der Publikation von H. Hope in "Acta Cryst." (Band 44, 1988, Seite 22 ff.) beschrieben sind, nur beschränkt anwendbar sind.

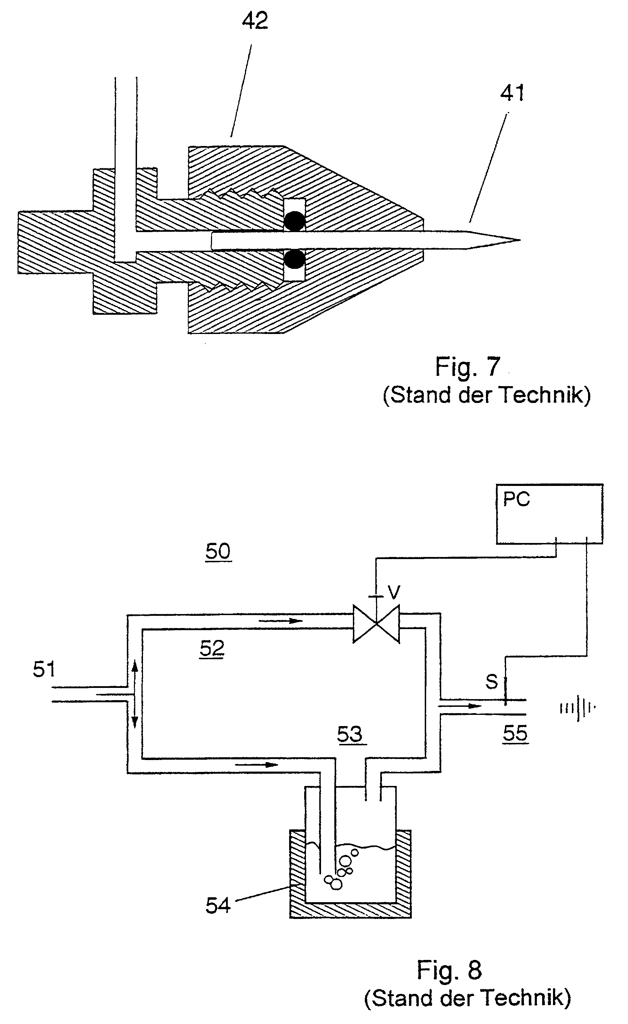

Eine Halterung für einzelne Proteinkristalle wird von R. Kiefersauer et al. in "J. Appl. Cryst." (Band 29, 1996, Seite 311 ff.) beschrieben. Die in Fig. 7 gezeigte herkömmliche Halterung für das sogenannte "Free Mounting System" umfaßt insbesondere eine Haltekapillare 41, die in einem Trägerblock 42 angeordnet ist. Ein Ende der Trägerkapillare 41 ist mit einer Saugeinrichtung (nicht dargestellt) verbunden, so daß das Innere der Haltekapillare 41 mit einem Unterdruck beaufschlagt werden kann. Das andere, aus dem Trägerblock 42 herausragende Ende bildet eine Auflage für den Proteinkristall. Diese Halterung besitzt den Vorteil, einzelne Proteinkristalle im Strahlengang der Analyseeinrichtung manipulieren zu können. Allerdings sind gesonderte Vorkehrungen zur Erhaltung der Kristallstabilität erforderlich, die die Manipulierbarkeit der als Probenkopf wirkenden Halterung einschränken. Bei der Halterung des Proteinkristalls am Ende der Haltekapillare 41 würde sich bei normalen Raumbedingungen durch den Lösungsmittelentzug die Kristallstruktur schnell verändern oder auflösen. Aus diesem Grund wird eine derartige Halterung in Kombination mit einer (in Fig. 7 nicht dargestellten) Feuchtezuführung betrieben, bei der zum Beispiel mittels Düsen ein feuchter Luftstrom auf den gehalterten Proteinkristall geführt wird. Der Nachteil der Feuchtezuführung mit gesonderten Düsen besteht in der erschwerten Handhabung der Halterung, da bei deren Manipulationsbewegungen die Feuchtezufuhrdüsen simultan mitbewegt werden müssen, ohne etwa die Kristallbestrahlung abzuschatten.

Ein weiterer Nachteil der herkömmlichen Feuchtezufuhr mit Feuchtezufuhrdüsen besteht in der erschwerten Steuerbarkeit des tatsächlich aus den Düsen austretenden Gasstromes in Bezug auf seine Feuchte und die Strömungsverhältnisse.

Die genannten Probleme bei der Halterung von Proteinkristallen treten auch bei der Manipulierung anderer partikelförmiger Materialproben mit einem hohen Flüssigkeitsgehalt auf. Hierzu zählen biologische Objekte, wie zum Beispiel biologische Zellen oder Zellbestandteile, oder auch synthetische nichtkristalline Objekte mit einem hohen Lösungsmittelgehalt. Falls derartige Objekte frei vom umgebenden Lösungsmittel vermessen werden sollen, so treten entsprechende Austrocknungsprobleme auf, wie sie oben am Beispiel der Proteinkristalle beschrieben wurden.

Aus US-A-4 9 33 548 ist eine Einrichtung zur Einführung von Proben in ein Massenspektrometer bekannt. Eine Probe wird mit einem Probenträger in einen Reaktor eingebracht, in dem die Probe in den gasförmigen Zustand überführt wird. Der Probenträger ist zur Halterung von Proben in strukturanalytischen Meßgeräten nicht geeignet.

Es ist die Aufgabe der Erfindung, eine verbesserte Halterungsvorrichtung für partikelförmige Materialproben mit einem hohen Flüssigkeitsgehalt anzugeben, die eine vereinfachte Manipulierung der Proben insbesondere in Meßgeräten ohne Einschränkung der Meßgerätfunktion erlauben. Es ist ferner die Aufgabe der Erfindung, neuartige und verbesserte Verwendungen einer derartigen Halterungsvorrichtung anzugeben.

Diese Aufgabe wird durch eine Halterungseinrichtung mit den Merkmalen gemäß Patentanspruch 1 gelöst. Vorteilhafte Ausführungsformen und Verwendungen der Erfindung ergeben sich aus den abhängigen Ansprüchen.

Erfindungsgemäß wird insbesondere eine Halterungsvorrichtung mit einem Trägerblock geschaffen, der nicht nur ein Auflageelement (z.B. eine nach Art einer Vakuumpinzette funktionierende Haltekapillare oder eine Schlaufenhalterung), sondern auch mindestens einen integrierten Gaskanal enthält, der auf das Ende des Auflageelements gerichtet ist. Der Gaskanal mündet angrenzend zum Auflageelement, so daß sich an dessen Ende eine lokale Atmosphäre von aus dem Gaskanal strömenden Gas oder Dampf bildet. Gemäß einer bevorzugten Ausführungsform der Erfindung besitzt der Gaskanal einen Innendurchmesser, der größer als der Außendurchmesser des Auflageelements ist, wobei dieses mittig durch den Gaskanal hindurchgeführt wird, so daß die Gas- oder Dampfzuführung durch den Gaskanal durch den nunmehr verbleibenden zylinderförmigen Hohlraum zwischen dem Auflageelement und der Gaskanalrand erfolgt. Das Auflageelement ist vom Gaskanal umgeben.

Gemäß einer besonders vorteilhaften Gestalt besteht die erfindungsgemäße Halterungsvorrichtung aus einem Kopfteil und einem Einsatzteil. Das Kopfteil enthält den Gaskanal, der simultan eine Durchführung der Haltekapillare oder der Schlaufenhalterung bildet. Das Kopfteil bildet ferner eine Aufnahme für das Einsatzteil, so daß dieses im Kopfteil axial verschiebbar und in einer bestimmten Position fixierbar ist. Damit ist der Abstand des Endes der Haltekapillare oder der Schlaufenhalterung, das eine Auflage für die partikelförmige Materialprobe bildet, von der Mündung des Gaskanals bzw. der Oberfläche des Trägerblocks in vorbestimmter Weise veränderlich.

Im Rahmen dieser Beschreibung ist ein Trägerblock durch jeden mechanischen Aufbau gegeben, der die Positionierung und/oder Bewegung einer Haltekapillare oder Schlaufenhalterung ermöglicht. Die Haltekapillare kann eine mit Unterdruck betriebene Hohlkapillare (Vakuumpinzette) oder auch ein kompaktes, langgestrecktes, spitzenförmiges Bauteil sein, an dessen Ende eine Auflage für die partikelförmige Materialprobe gegeben ist. Die Erfindung ist somit nicht auf die Implementierung mit dem Vakuumpinzettenaufbau beschränkt, sondern auch mit anderen Halterungsvorrichtungen anwendbar, bei denen die partikelförmige Materialprobe an der Spitze der Haltekapillare unter Wirkung von Adsorptionskräften, elektrischen Kräften oder einem Klebemittel anhaftet. Ein Beispiel für eine derartige alternative Halterungsvorrichtung ist die bereits genannte Schlaufenhalterung, die aus einem Basisteil, einem Trägerteil und der eigentlichen Schlaufe (sog. Loop) besteht. Schlaufenhalterungen dieser Art sind an sich aus der Proteinkristallographie zum Schockgefrieren von Proben bekannt. Der Begriff Gaskanal umfaßt jede Art von Gaszufuhrleitungen. Es können mehrere Gaskanäle vorgesehen sein. Das im Gaskanal geführte Gas umfaßt anwendungsabhängig ein Gas oder einen Dampf mit einem bestimmten Gehalt dampfförmiger Substanzen, die der in der partikelförmigen Materialprobe enthaltenen Flüssigkeit und/oder Zusatzstoffen entsprechen. So kann beispielsweise vorgesehen sein, daß zur Erhaltung bestimmter Oberflächeneigenschaften auf der Materialprobe durch den Gaskanal eine dampfförmige Substanz geleitet wird, die sich von der Flüssigkeit oder Lösung in der Probe unterscheidet.

Die Erfindung ist mit den folgenden Vorteilen verbunden. Der erfindungsgemäße Trägerblock mit integriertem Gaskanal ermöglicht eine verbesserte und kontrollierte Manipulierbarkeit der Probe. Nachteilige Abschattungen im Meßsystem durch gesonderte Gasdüsen werden vermieden. Der Gaskanal erlaubt eine homogene und gleichmäßige Gasführung. Ein vollständiger Einschluß der Probe ist in allen Stellungen der Halterungseinrichtung gewährleistet. Es können vereinfacht gezielte Veränderungen an der Probe vorgenommen werden. Dies betrifft sowohl die Zufuhr von Zusatzstoffen durch den Gaskanal als auch beispielsweise die genannte Kryotechnik zum Schutz vor Strahlenschäden in Proteinkristallen. Die erfindungsgemäße Halterungsvorrichtung ist selbst miniaturisierbar. Bei axialsymmetrischer Anordnung des Auflageelements ist dieses automatisch im Gasstrom zentriert. Der erfindungsgemäße Aufbau der Halterungsvorrichtung erlaubt eine vereinfachte Justierung in Bezug auf eine Meßanordnung. Die Zahl störender (z.B. streuender) Bauteile im Meßbereich wird verringert. Die gehalterte Probe ist besser zugänglich für zusätzliche Meßverfahren (z.B. optische Messungen).

Die Erfindung erlaubt erstmalig eine definierte Temperatureinstellung in partikelförmigen Materialproben, in dem der Gasstrom im Trägerblock auf eine definierte Temperatur gebracht wird. Aufgrund der geringen Probengröße nimmt die Probe unmittelbar die Gastemperatur an. In diesem Zusammenhang ist zu betonen, daß das im Gaskanal geführte Gas ggf. auch ein Inertgas ohne einen Dampfzusatz sein kann und von diesem Inertgas lediglich eine Temperierungs- oder anwendungsabhängig sogar Trocknungsfunktion übernommen wird.

Weitere Vorteile und Einzelheiten der Erfindung werden im folgenden unter Bezug auf die Zeichnungen beschrieben. Es zeigen:
- Fig. 1:: eine Schnittdarstellung einer Ausführungsform der erfindungsgemäßen Halterungsvorrichtung,
- Fig. 2:: eine Schnitteildarstellung eines Kopfteils der Halterungsvorrichtung gemäß Fig. 1,
- Fig. 3:: eine Schnitteildarstellung des Einsatzteils der Halterungsvorrichtung gemäß Fig. 1,
- Fig. 4:: eine Schnittdarstellung einer weiteren Ausführungsform der erfindungsgemäßen Halterungsvorrichtung,
- Fig. 5:: eine Längs- und eine Seiten-Teildarstellung des Einsatzteils einer Halterungsvorrichtung gemäß Fig. 4,
- Fig. 6:: eine Schnittdarstellung einer weiteren Ausführungsform der erfindungsgemäßen Halterungsvorrichtung mit einer vereinfachten Querschnitt-Teildarstellung des Kopfteils dieser Halterungsvorrichtung,
- Fig. 7:: eine Schnittdarstellung einer herkömmlichen Halterungsvorrichtung, und
- Fig. 8:: eine Schemadarstellung einer herkömmlichen Anordnung zur Erzeugung eines feuchten Gasstroms.

Die Erfindung wird im folgenden am Beispiel der Proteinkristallhalterung beschrieben, kann aber in analoger Weise bei der Halterung anderer partikelförmiger Probematerialien (insbesondere biologische oder synthetische Materialien, wie sie oben genannt wurden) implementiert werden.

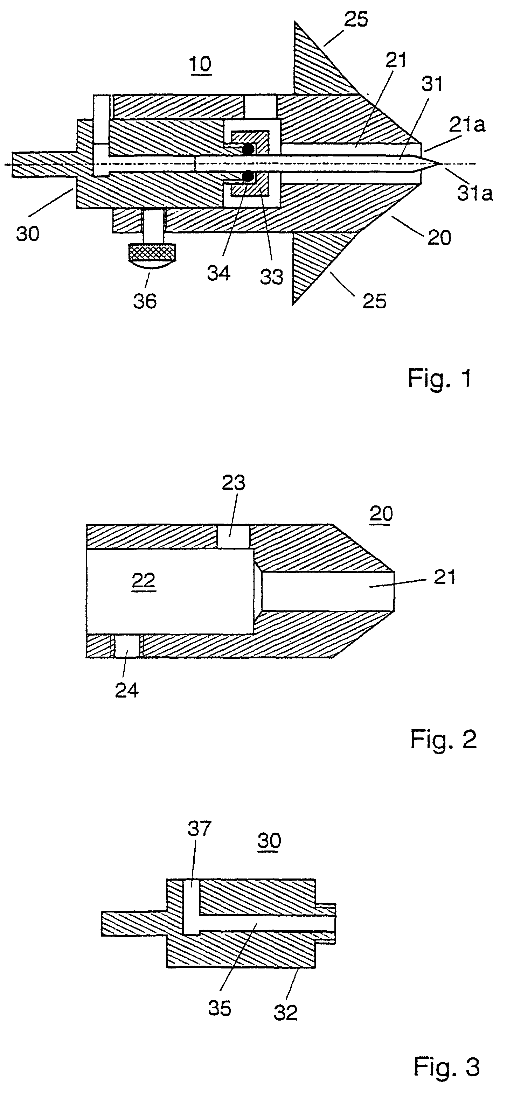

Fig. 1 zeigt eine erfindungsgemäße Halterungsvorrichtung am Beispiel eines im Schnitt dargestellten Kristallhalters für Proteinkristalle. Der Kristallhalter umfaßt einen Trägerblock 10 mit einem Kopfteil 20 und einem Einsatzteil 30, die einzeln entsprechend in den Figuren 2 und 3 teilweise dargestellt sind. Das Kopfteil 20 ist ein massives Bauteil, das eine erste Bohrung für den Gaskanal 21 und eine zweite Bohrung für die Einsatzteilaufnahme 22 aufweist. Die Bohrungen sind miteinander axial ausgerichtet. Der Gaskanal 21 ist über einen Teil der Einsatzteilaufnahme 22 und über den Seitenkanal 23 mit einer Gasquelle (nicht dargestellt) verbunden. Der Seitenkanal 23 verläuft im wesentlichen senkrecht zur Achsenrichtung des Gaskanals 21 und der Einsatzteilaufnahme 22 und mündet am gaskanalseitigen Ende der Einsatzteilaufnahme 22 in diese. Das Kopfteil 20 besitzt ferner eine seitliche Öffnung 24, die von der Einsatzteilaufnahme 22 nach außen führt und zur Aufnahme des Stellelements 36 eingerichtet ist.

Der Gaskanal 21 verläuft gerade von der Einsatzteilaufnahme 22 zur Mündung an der meßgeräteseitigen, sich kegelförmig verjüngenden Oberfläche des Kopfteils 20. Am Ende des Gaskanals 20 ist ein Mündungsende 21a ausgebildet, das auf das Auflageende 31a der Haltekapillare 31 gerichtet ist.

Das Einsatzteil 30 ist als Träger für die Haltekapillare 31 (s. Fig. 1) vorgesehen und umfaßt ein Basisteil 32 und ein Dichtteil 33. Das Basisteil 32, das einzeln in Fig. 3 dargestellt ist, ist ein Formteil mit einer zentralen Bohrung, die als Kapillaraufnahme 35 vorgesehen ist. Die Kapillaraufnahme 35 ist mit einem Unterdruckkanal 37 verbunden, der beim dargestellten Beispiel im wesentlichen senkrecht zur Kapillaraufnahme 35 aus dem Einsatzteil 30 austritt. Der Unterdruckkanal 37 ist über eine Unterdruckleitung mit einer Pumpeinrichtung (nicht dargestellt) verbunden. Im zusammengesetzten Zustand des Einsatzteils 30 steckt de Haltekapillare 31 in der Kapillaraufnahme 35. Der Innendurchmesser der Kapillaraufnahme 35 ist vorzugsweise für eine formschlüssige Passung mit der Außenform der Haltekapillare 31 an deren Außendurchmesser angepaßt. Es kann aber auch ein geringfügiges Spiel vorhanden sein, da das Dichtteil 33 mit einer Ringdichtung 34 versehen ist, um einen Druckverlust vom Inneren der Haltekapillare 31 bzw. der Kapillaraufnahme 35 hin zum Gaskanal 21 zu verhindern.

Die Haltekapillare 31 besteht vorzugsweise aus einem Glasröhrchen oder einer Mikropipette (Durchmesser rd. 1 mm) mit ausgezogener Spitze. Die Herstellung der Haltekapillare 31 erfolgt analog zur Kapillarherstellung bei der sogenannten "Patch-Clamp-Technik". Nach Ausziehen eines Glasröhrchens wird ein Spitzendurchmesser im um-Bereich erzielt. Im Bereich des gewünschten Spitzendurchmessers wird die Spitze abgebrochen und einem Schleifvorgang unterzogen, so daß sich eine möglichst ebene Ringauflagefläche für den Proteinkristall bildet. Der gewählte Durchmesser der Mikropipettenspitze ist von der Proteinkristallgröße abhängig und beträgt beispielsweise rund 0.1 bis 0.3 mm. Der Durchmesser kann jedoch bei besonders kleinen Proteinkristallen (bis zu 30 µm) entsprechend kleiner gewählt sein. Die Halterung erfolgt bei einem Unterdruck in der Kapillare von rd. 0.05 bar bis 0.2 bar.

Das Dichtteil 33 ist eine auf den Vorsprung des Basisteils 32 aufsetzbare Kappe mit einer axialen Bohrung, die mit der Kapillaraufnahme 35 ausgerichtet ist, und dient der Positionierung der Haltekapillare 31 und der Abdichtung der Kapillaraufnahme 35. Zwischen dem Dichtteil 33 und dem Vorsprung ist die Ringdichtung 34 angebracht.

Das Dichtteil 33 wirkt wie folgt mit dem Basisteil 32 zusammen. Die Haltekapillare 31 wird durch die Bohrung des Dichtteils 33 geschoben und mit diesem auf den hierzu vorgesehenen kopfteilseitigen Vorsprung des Einsatzteils 30 mit der Ringdichtung 34 (z. B. aus Gummi) aufgesetzt. Zwischen dem Dichtteil 33 und dem Vorsprung ist eine Schraubverbindung (nicht dargestellt) vorgesehen, so daß das Dichtteil 33 wie ein Schraubdeckel auf dem Vorsprung befestigt werden kann. Alternativ ist es möglich, daß das Dichtteil 33 bereits locker auf dem Vorsprung aufsitzt und die Haltekapillare 31 durch die Bohrung des aufsitzenden Dichtteils 33 geschoben wird. Beim Anschrauben wird die Ringdichtung komprimiert. Das Dichtungsmaterial legt sich gegen alle angrenzenden Oberflächen der Kapillare bzw. des Einsatz- und Dichtungsteils, so daß die Kapillaraufnahme 35 und somit das Innere der Kapillare gegenüber dem Gaskanal abgedichtet werden.

Das Basisteil 32 mit der aufgesetzten Haltekapillare 31 wird in die Einsatzteilaufnahme 22 des Kopfteils 20 eingeführt. Das Einsatzteil 30 wird je nach der gewünschten Nutzungssituation in die Einsatzteilaufnahme 22 eingeschoben, so daß die ausgezogene Spitze der Haltekapillare 31 mit der Auflage für den Proteinkristall im Gaskanal versenkt bleibt oder um einen vorbestimmten Abstand aus der Mündung des Gaskanals 21 herausragt. Es sind beispielsweise drei Nutzungssituationen vorgesehen. Im Transportzustand ist die Haltekapillare im Gaskanal zurückgezogen. Die Spitze der Haltekapillare 31 ist vom Kopfteil verdeckt. Im Beströmungszustand ragt die Spitze beispielsweise im Bereich von rund 1 bis 5 mm aus der Mündung. Im Kryobehandlungszustand (ohne die feuchte Gasbeströmung) kann die Spitze noch weiter aus der Mündung herausragen (z.B. rund 20 mm). In der gewünschten Position wird das Einsatzteil 30 mit dem Stellelement 36 fixiert. Danach erfolgt der Anschluß der Unterdruckleitung am Unterdruckleitungskanal 37 bzw. der Gasversorgung am Seitenkanal 23 und die Aufnahme eines Proteinkristalls (z.B. ein CODH-(Kohlenmonoxiddehydroginase)-Kristall) aus einer Wachstumslösung. Die erfindungsgemäße Halterungsvorrichtung ist dann einsatzbereit und wird mit dem Kopfteil 20 (ggf. mit einer separaten Halterung) oder mit dem Einsatzteil 30 zum Beispiel an einem Goniometerkopf einer Röntgen- oder Synchrotronbestrahlungsanlage befestigt.

Die Haltekapillare 31 kann alternativ auch fest und gasdicht mit dem Dichtteil 33 und/oder dem Basisteil 32 verbunden (z.B. verklebt) sein.

Die Teile der erfindungsgemäßen Halterungsvorrichtung 10 bestehen vorzugsweise aus aus korrosionsfreiem Material (z.B. Kunststoff) geringer Wärmeleitfähigkeit wie z.B. Delrin oder Teflon (registrierte Marken). Es sind jedoch anwendungsabhängig auch andere Materialien einsetzbar. Die Dimensionierung erfolgt ebenfalls in Abhängigkeit vom Anwendungsfall. Der Kristallhalter 10 ist in den Figuren 1 bis 3 etwa im Maßstab 2:1 dargestellt. Abweichend von der beispielhaften Darstellung können die Proportion der Einzelteile relativ zueinander verändert werden, wobei jedoch vorteilhafterweise der Gaskanal 21 mindestens mit einer Länge von rund 15 mm ausgeführt wird. Die Länge des Gaskanals im Kopfteil 20 wird nämlich vorzugsweise so gewählt, daß sich die im Gas zugeführten Lösungsmittel- oder Zusatzstoffdämpfe möglichst homogen verteilen. Zur Erzielung eines möglichst geraden und ungestörten Austritts des Gases aus dem Gaskanal 21 besitzt dieser ein einfaches Mündungsende 21a auf einer im wesentlichen begrenzt abgeflachten oder ebenen Oberfläche des Kopfteils 20. Die am Auflageende 31a der Haltekapillare 31 angebrachte Probe wird vollständig vom Gasstrom aus dem Gaskanal eingeschlossen.

Die äußere Form des Kopfteils 20 ist ferner so gestaltet, daß der jeweilige Meßvorgang nur minimal beeinträchtigt wird. Hierzu verjüngt sich das Kopfteil 20 meßgeräteseitig bzw. hin zum Auflageende der Haltekapillare 31 derart, daß an der Mündung des Gaskanals 21 der Außendurchmesser des Kopfteils 20 im wesentlichen gleich dem Mündungsdurchmesser des Gaskanals 21 ist. Meßgeräteseitig bildet das Kopfteil 20 somit einen Kegelstumpf mit einem Neigungswinkel gegenüber der Kegelachse von rund 35°.

Fig. 1 zeigt ferner das Kopfteil 20 mit einer integrierten Vereisungsabschirmung 25. Die Vereisungsabschirmung 25 befindet sich zwischen dem kegelstumpfförmigen Ende des Kopfteiles 20 und den seitlichen Öffnungen und Kanälen am im übrigen zylinderförmigen Körper des Kopfteils 20. Die Vereisungabschirmung 25 besitzt besondere Vorteile beim Schutz der hinteren Kristallhalterteile bei einer Kryobehandlung, die im einzelnen weiter unten erläutert wird.

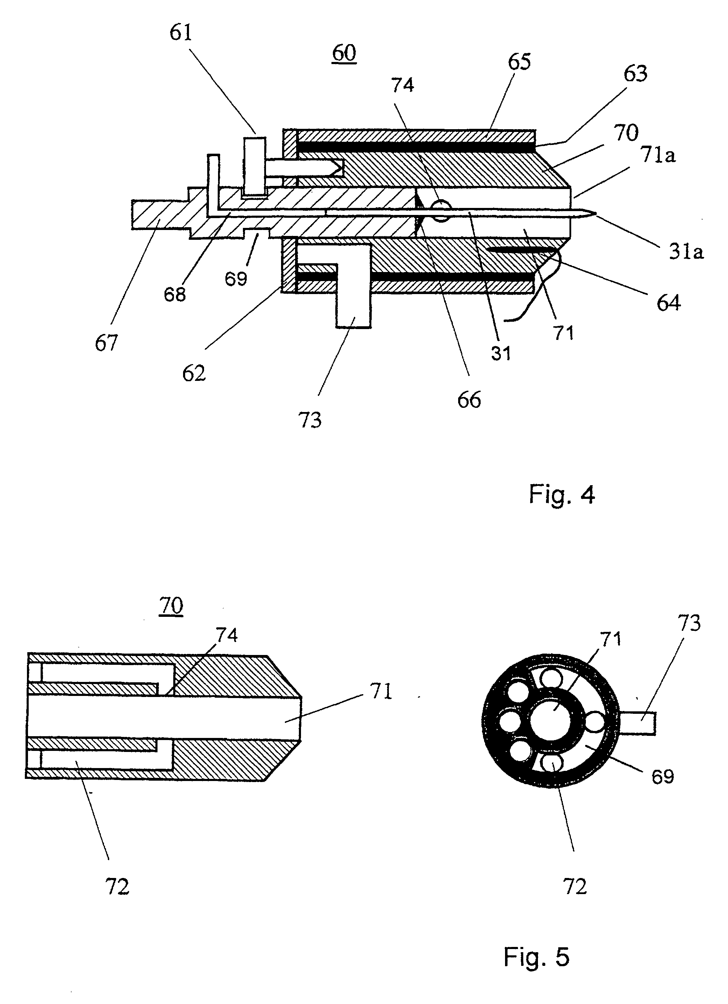

Als zusätzlicher Vereisungsschutz und/oder als Temperierungseinrichtung für das den Gaskanal 21 durchtretende Gas kann in das Kopfteil 20 eine Temperiereinrichtung (s. Fign. 4-6) integriert werden. Die Temperiereinrichtung kann beispielsweise ein elektrisches Heizelement oder ein Durchflußsystem zum Durchleiten von Heiz- oder Kühlflüssigkeiten oder ein Peltier-Element umfassen. Ein Heizelement kann beispielsweise ein Heizdraht sein, der in eine spiralförmige Nut in der kegelförmigen Oberfläche des Kopfteils 20 eingelassen ist und gegebenenfalls mit einem Silikonkautschuk befestigt oder abgedeckt ist. Es kann ferner im Kopfteil mit dem Gaskanal 21 verbunden, vorzugsweise an dessen Mündungsende, eine Sensoreinrichtung vorgesehen sein, die einen Feuchte- und/oder Temperatursensor oder chemische Sensoren umfaßt.

Der Aufbau gemäß Fig. 1 kann dahingehend modifiziert sein, daß das Dichtteil 33 integral mit dem Kopfteil 20 verbunden ist und die Einsatzteilaufnahme 22 gaskanalseitig abschließt. Bei einer derartigen Gestaltung ragt die Haltekapillare 31 durch eine axiale Bohrung im Dichtteil 33 einerseits durch den Gaskanal bis zu dessen Mündung und um den oben genannten Abstand darüber hinaus und andererseits in die Kapillaraufnahme des Einsatzteils 30. Das Einsatzteil 30 kann bei dieser Ausführungsform mit einem Außengewinde versehen sein, das mit einem Innengewinde an der Innenoberfläche der Einsatzteilaufnahme 22 des Kopfteils 20 zusammenwirkt. In diesem Fall erfolgt die Abdichtung mit einer Ringdichtung zwischen dem eingeschraubten Einsatzteil und dem integralen Dichtteil.

Die Figuren 4 und 5 zeigen eine weitere Ausführungsform einer erfindungsgemäßen Halterungsvorrichtung, mit der ebenfalls ein Kristallhalter für Proteinkristalle bereitgestellt wird. Wie bei der Ausführungsform gemäß Fig. 1 umfaßt der Kristallhalter einen Trägerblock 60 mit einem Kopfteil 70, das mit weiteren Einzelheiten auch in Fig. 5 dargestellt ist, und einem Einsatzteil 67. Das Kopfteil 70 besitzt eine durchgehende Bohrung, die einerseits den Gaskanal 71 und andererseits eine Aufnahme für das Einsatzteil 67 bildet. Der Gaskanal 71 ist über ein Leitungssystem im Kopfteil 70 und über den Seitenkanal 73 (Schlauchanschluß) mit einer nicht dargestellten Gasquelle verbunden. Der Seitenkanal 73 geht im Kopfteil 70 in mehrere Teilzweige 72 über, die bei den Öffnungen 74 direkt in den Gaskanal 71 münden.

Im Kopfteil 70 ist eine Heizung 63 und ein Temperatursensor 64 integriert. Damit läßt sich das Kopfteil 70 auf eine vorbestimmte Temperatur einstellen. Das Bezugszeichen 65 bezeichnet eine zusätzliche Isolationsschicht, mit der die Temperaturkontrolle noch verbessert wird. Da die Teilzweige 72 durch das temperierte Kopfteil 70 verlaufen, ist eine optimale Temperaturanpassung des Gasstromes unabhängig von etwaigen Temperaturschwankungen in der Umgebung des Trägerblocks 60 gegeben.

Das Einsatzteil 67 ist wie bei der oben erläuterten Ausführungsform als Träger für die Haltekapillare 31 ausgelegt. Die Haltekapillare 31 steckt im Einsatzteil 67 und ist gegenüber diesem mit einer Dichtung 66 aus Klebstoff oder Wachs abgedichtet. Damit wird ein Unterdruck im Unterdruckkanal 68 über die Haltekapillare 31 unmittelbar an deren Spitze 31a übertragen.

Die Position der Mikropipettenspitze 31a und damit der Probe (nicht dargestellt) relativ zum Mündungsende 71a des Gaskanals 71 wird mit der Positionsschraube 61 eingestellt. Falls das Kopfteil 70 und das Einsatzteil 67 relativ zueinander verdrehbar gelagert sind, so läuft der Kopf der Positionsschraube 61 bei Drehbewegung in einer entsprechenden Nut 69 des Einsatzteils 67.

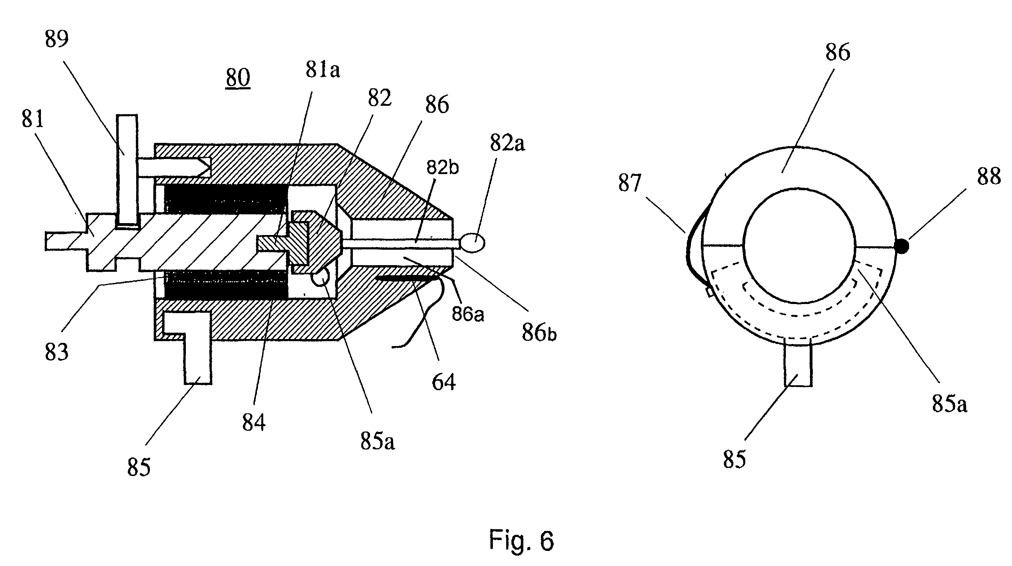

In Fig. 6 ist eine weitere Ausführungsform der Erfindung illustriert, bei der das Auflageelement zur Halterung der Probe durch eine Schlaufenhalterung gebildet wird. Fig. 6 zeigt im linken Teil wiederum einen Kristallhalter mit einem Trägerblock 80, der aus einem Kopfteil 86 und einem Einsatzteil 81 aufgebaut ist. Das Kopfteil 86 ist ein massives Bauteil mit zwei axial ausgerichteten, aneinandergrenzenden Bohrungen, die einerseits den Gaskanal 86a mit dem Mündungsende 86b und andererseits die Aufnahme für das Einsatzteil 81 bilden.

Das Einsatzteil 81 ist wegen der Loop-Gestaltung des Aufnahmeelements ebenfalls ein kompaktes Bauteil, da keine Unterdruckleitung erforderlich ist. Das Einsatzteil 81 ist gegenüber dem Kopfteil 86 über ein Nadellager 83 drehbar gelagert. Am inneren Ende des Einsatzteils 81 ist eine Magnethalterung 81a angebracht, auf der das Basisteil 82 der Schlaufenhalterung sitzt. Das Basisteil 82 besitzt eine innere Ausnehmung, die an die äußere Form der Magnethalterung 81a angepaßt ist, so daß die Schlaufenhalterung im Kopfteil 86 zentriert wird.

Das Bezugszeichen 84 bezeichnet eine Heizung, mit der die Temperatur des Kopfteils 86 und damit des Gasstroms vom Seitenkanal 85 zum Gaskanal 86a eingestellt werden kann. Die Temperatur des Kopfteils 86 wird mit dem Temperatursensor 64 überwacht. Das über den Seitenkanal 85 eintretendende Gas wird im Kopfteil 86 wiederum durch Teilzweige (im rechten Teil von Fig. 6 gestrichelt gezeichnet) zur jeweiligen Austrittsöffnung 80a geführt.

Die Schlaufe (Loop) 82a ist über das Trägerteil 82b mit dem Basisteil 82 verbunden. Die Position des Loop 82a relativ zum Mündungsende 86b des Gaskanal 86a wird mit der Positionsschraube 89 eingestellt, deren Kopf wie bei der oben beschriebenen Ausführungsform in eine Nut im Einsatzteil 81 ragt. Damit ist die uneingeschränkte Drehbarkeit des Kopfteils relativ zum Einsatzteil gewährleistet. Diese Drehbarkeit des Kopfteils ist eine wichtige Eigenschaft der erfindungsgemäßen Halterungsvorrichtung, da bei einer für eine Messung an der Probe notwendigen Drehung Zuleitungen zum Probenkopf nicht beschädigt werden dürfen.

Das Aufnehmen einer partikelförmigen Probe (z.B. Proteinkristall) mit einem Loop 82a ist an sich bekannt und wird bisher standardmäßig in der Proteinkristallographie zur Probenmanipulierung beim Schockgefrieren von Proben eingesetzt. Um eine derartige Kryokonservierung zu gewährleisten, ist die erfindungsgemäße Halterungsvorrichtung so ausgebildet, daß die Schlaufenhalterung ohne weiteres aus dem Kopfteil 86 entnommen werden kann. Hierzu ist das Kopfteil 86 in zwei Halbschalen geteilt, wie dies im rechten Teil von Figur 6 illustriert ist. Die Halbschalen sind über ein Gelenk 88 verbunden und auf der entgegengesetzten Seite mit einer Feder 87 verspannt. Durch Öffnung der Federverbindung können die Halbschalen auseinandergeklappt und die Schlaufenhalterung durch Abnahme des Basisteils 82 von der Magnethalterung 81a entnommen werden. Der Loop 82a kann nun in einen Vorratstank mit flüssigem Stickstoff überführt werden.

Im folgenden werden weitere Einzelheiten der Gaszuführung in den Gaskanal einer erfindungsgemäßen Halterungsvorrichtung erläutert.

Die Gaszuführung in den Gaskanal 21, 71 oder 86a kann beispielsweise unter Verwendung eines Feuchtesteuerungssystems erfolgen, wie es an sich aus der oben genannten Publikation von R. Kiefersauer et al. (1996) bekannt und in Fig. 8 dargestellt ist. In Bezug auf die Einzelheiten des Feuchtesteuerungssystems wird die Publikation von R. Kiefersauer et al. durch Bezugnahme in die folgende Beschreibung aufgenommen. Das System 50 umfaßt im einzelnen eine Gaszufuhr 51, die sich in einen Trockenzweig 52 und einen Feuchtzweig 53 trennt. Im Trockenzweig 52 ist ein computergesteuertes Ventil V vorgesehen. Der Feuchtzweig 53 führt zunächst in das Wasser- und/oder Zusatzstoffreservoir 54, in dem die zugeführte trockene Luft durch Wasser bei erhöhter Temperatur geführt wird.

Anschließend besitzt die im Feuchtzweig 53 geführte Luft einen hohen Feuchtegehalt (nahezu Sättigung). Nach dem Ventil V bzw. dem Wasserreservoir 54 werden beide Zweige wieder zusammengeführt. Im gemeinsamen Gaszufuhrkanal 55 ist ein Feuchtesensor S angebracht, wobei die Computersteuerung des Ventils V in Abhängigkeit vom Sensorsignal und vorbestimmten Feuchtewerten die Ventilfunktion steuert. Über eine Schlauchverbindung ist die Gaszufuhrleitung 55 mit dem Seitenkanal 23 der erfindungsgemäßen Halterungsvorrichtung verbunden. Anstelle des Sensors S kann die Steuerung auch mit einem Feuchtesensor im Gaskanal 21 der Halterungsvorrichtung (s. oben) vorgenommen werden.

Zur Realisierung der an sich bekannten Kryobehandlung wird ein am Ende der Haltekapillare 31 gehalterter Proteinkristall einer Abkühlung unterzogen. Die Abkühlung erfolgt vorzugsweise als Schockgefrieren mit einem kalten, gesondert zugeführten Stickstoffgasstrom bei einer Temperatur von rd. -170°C. Die weitere Gaszufuhr über den Gaskanal 21 unterbleibt. Ein tiefgekühlter Proteinkristall wird im gekühlten Zustand der Strukturanalyse unter Bestrahlung mit Synchrotronstrahlung oder Röntgenstrahlung unterzogen.

Zum Schutz gegen ein Austrocknen des Kristalls im kalten Kryostrom kann eine Zusatzschutzschicht auf dem Kristall angebracht werden. Hierzu wird ein Tropfen einer Schutzlösung mit einer an sich bekannten Draht- oder Kunststoffschlaufe, die herkömmlicherweise selbst zur Proteinkristallhalterung verwendet wird, aufgenommen und im feuchten Gasstrom auf den mit der Halterungsvorrichtung gehalterten Kristall übertragen. Die Schlaufe wird über die Kapillarspitze mit dem Kristall hinund zurückgeführt, so daß der Lösungstropfen am Kristall zumindest teilweise hängenbleibt.

Die erfindungsgemäße Halterungsvorrichtung erlaubt die Implementierung eines neuen Kristalltransformationsverfahrens, das im folgenden erläutert wird.

Das Kristalltransformationsverfahren umfaßt einen definierten Wasserentzug aus dem Proteinkristall vor der Strukturanalyse. Es wurde erstmalig festgestellt, daß mit einem reproduzierbaren Wasserentzug aus dem Kristall von bis zu 20% eine Erhöhung der Molekülordnung und damit einer erhebliche Verbesserung des Analyseergebnisses erzielt werden kann. Ein mit der Halterungsvorrichtung gehalterter Proteinkristall wird unter Verwendung einer Anordnung gemäß Figur 5 entsprechend einem vorbestimmten Zeitmuster ein Gasstrom sich verringernder Feuchte zugeführt. Die Dauer der Feuchtereduzierung liegt kristallgrößenabhängig im Bereich von 5 bis 60 min. Anschließend erfolgt die an sich bekannte Strukturanalyse.

Das Kristalltransformationsverfahren liefert die folgenden Vorteile. Es wurde eine Steigerung des maximalen Streuwinkels und des Signal-Rausch-Verhältnisses bei größeren Streuwinkeln festgestellt. Vor der Transformation sind die größeren Streuwinkel nur beschränkt auswertbar. Nach der Transformation besitzen auch die Reflexe bei großen Winkeln eine genügende Amplitude. Das Kristalltransformationsverfahren führt ferner zu einer Verringerung der Mosaizität der Kristalle von herkömmlichen Werten im Bereich von rd. 1.5° auf Werte bis zu 0.4°. Eine hohe Mosaizität ist nachteilig, da durch Verkippungen von Kristalliten viele große Spots auftreten, die sich gegenseitig überlagern und eine Auswertung erschweren. Weitere Parameter, die für die Kristallographen von Interesse bei der Auswertung der Beugungsbilder sind und sich bei Einsatz der erfindungsgemäßen Halterungsvorrichtung erheblich verbessern, sind der sogenannte B-Faktor, die Intensität der Beugungsordnungen und die auftretenden Streuwinkel.

Die erfindungsgemäße Halterungsvorrichtung kann zusätzlich oder neben der strukturanalytischen Messung dazu eingerichtet sein, den gehalterten Proteinkristall pulsförmigen Feuchtänderungen zum Ausheilen von Strukturdefekten auszusetzen. Dieses sogenannte "Annealing" ist mit der erfindungsgemäßen Halterungsvorrichtung besonders vorteilhaft zu realisieren, da die Temperatur und Feuchte des Gasstroms im Gaskanal 21 mit hoher Reproduzierbarkeit und Genauigkeit eingestellt werden können. Falls die erfindungsgemäße Halterungsvorrichtung zur Halterung von Partikeln aus organischen Molekülen, Stoffen mit großem Wassergehalt, zuckerhaltige Substanzen, hydratisierte oder dehydratisierte Stoffe oder polymere Polysaccharide vorgesehen ist, würde die Dimension der Spitze der Haltekapillare 41, des Gaskanals 21, des Gasunterdrucks in der Haltekapillare 31 und die Zusammensetzung des zugeführten Gases entsprechend angepaßt.

Die erfindungsgemäße Halterungsvorrichtung kann dahingehend modifiziert sein, daß nicht ein Gaskanal 21, in dem die Haltekapillare 31 verläuft, vorgesehen ist, sondern eine Mehrzahl von Gaskanälen. Diese können beispielsweise, wie in Figur 5 illustriert, mit Abstand von der Haltekapillare durch das Kopfteil verlaufen. Diese Gaskanäle sind vorzugsweise gerade, jedoch gegenüber der durch die Haltekapillare gebildeten Bezugsachse geneigt, so daß die Mündungsenden dieser Gaskanäle gemeinsam auf das Auflageende der Haltekapillare gerichtet sind. Gemäß einer weiteren Modifikation ist es möglich, die erfindungsgemäße Halterungsvorrichtung nicht mit einem mehrteiligen Trägerblock, sondern mit einem einstückigen Trägerblock auszubilden, in dem dann die Haltekapillare und der mindestens eine Gaskanal gehaltert bzw. ausgebildet sind.

## Patentansprüche

1. Halterungsvorrichtung für eine partikelförmige Probe mit einem Trägerblock (10, 60, 80) für ein Auflageelement (31, 82), das ein freies Auflageende (31a, 82a) für die Probe besitzt, wobei die Halterungsvorrichtung zur Anordnung der Probe in einem strukturanalytischen Meßgerät geeignet ist und das Auflageelement (31, 82) so am Trägerblock (10, 60, 80 angebracht ist, daß das Auflageende (31a, 82a) aus den Trägerblock (10, 60, 80) herausragt,
**dadurch gekennzeichnet, daß** der Trägerblock (10) mindestens einen integralen Gaskanal (21, 71, 86a) mit einem Mündungsende (21a, 71a, 86b) enthält, der auf das Auflageende (31a, 82a) des Auflageelements (31, 82) gerichtet ist, so daß sich im gasdurchströmten Zustand des Gaskanals das Auflageende (31a, 82a) in einer lokalen Atmosphäre eines den Gaskanal (21, 71, 86a) durchströmenden Gases befindet.

2. Halterungsvorrichtung gemäß Anspruch 1, bei dem der Trägerblock (10, 60, 80) ein Kopfteil (20 70, 86) und ein Einsatzteil (30, 67, 81) umfaßt, wobei der Gaskanal (21, 71, 86a) das Kopfteil (20, 70, 86) gerade von einer Einsatzteilaufnahme (22) zum Mündungsende (21a, 71a, 86b) durchsetzt und das Auflageelement (31, 82) am Einsatzteil (30, 67, 81) in der Einsatzteilaufnahme (22) angebracht ist und durch den Gaskanal (21, 71, 86a) führt.

3. Halterungsvorrichtung gemäß Anspruch 2, bei der das Einsatzteil (30 67, 81) in der Einsatzteilaufnahme (22) axial beweglich und in einer vorbestimmten Position mit einem Stellelement (36, 61, 89) fixierbar ist, so daß das Auflageende (31a, 82a) des Auflageelements (31, 82) in das Kopfteil (20, 70, 86) versenkbar ist.

4. Halterungsvorrichtung gemäß Anspruch 1, bei der der Abstand des Auflageendes (31a, 82a) über der Oberfläche des Trägerblocks (10, 60, 80) im Bereich von 1 bis 5 mm gewählt ist.

5. Halterungsvorrichtung gemäß einem der vorhergehenden Ansprüche 2 bis 4, bei der am Kopfteil (20) eine Vereisungsabschirmung (25) vorgesehen ist.

6. Halterungsvorrichtung gemäß einem der vorhergehenden Ansprüche 2 bis 5, bei der im Kopfteil (70, 86) eine Temperiereinrichtung (63, 84) vorgesehen ist.

7. Halterungsvorrichtung gemäß einem der vorhergehenden Ansprüche, bei der am Mündungsende (21a, 71a, 86b) des Gaskanals (21, 71, 86a) ein Temperatursensor (64) und/oder ein Feuchtesensor angebracht ist.

8. Halterungsvorrichtung gemäß einem der vorhergehenden Ansprüche, bei der das Auflageelement (31, 82) eine Haltekapillare (31) oder eine Schlaufenhalterung (82) ist.

9. Halterungsvorrichtung gemäß einem der vorhergehenden Ansprüche 2 bis 8, bei der das Kopfteil (20, 70, 86) relativ zum Einsatzteil (30, 67, 81) frei verdrehbar ist.

10. Halterungsvorrichtung gemäß einem der vorhergehenden Ansprüche 2 bis 9, bei der eine Gaszuleitung in den Gaskanal (71, 86a) über Teilzweige erfolgt, die in das Kopfteil (70, 86) integriert sind.

11. Verwendung einer Halterungsvorrichtung gemäß einem der Ansprüche 1 bis 10 als Probenhalterung für einen Proteinkristall bei strukturanalytischen Untersuchungen, zum Schockgefrieren von Proteinkristallen oder zur Kristalltransformation an Proteinkristallen.

## Claims

1. A holder device for a particulate sample, with a support block (10, 60, 80) for a supporting element (31, 82) which has a free supporting end (31a, 82a) for the sample, wherein the holder device is adapted to arrange the sample in a structural analytic measuring apparatus and the supporting element (31, 82) is so fitted on the support block (10, 60, 80) that the supporting end (31a, 82a) projects out of the support block (10, 60, 80), **characterized in that** the support block (10) includes at least one integral gas channel (21, 71, 86a) with an outlet end (21a, 71a, 86b) which is so directed towards the supporting end (31a, 82a) of the supporting element (31, 82) that, when gas is flowing through the gas channel, the supporting end (31a, 82a) is present in a local atmosphere of a gas flowing through the gas channel (21, 71, 86a)

2. A holder device according to claim 1, in which the support block (10, 60, 80) comprises a head part (20, 70, 86) and an insert part (30, 67, 81), wherein the gas channel (21, 71, 86a) passes through the head part (20, 70, 86) directly to the outlet end (21a, 71a, 86b) from a socket (22) receiving the insert part and the supporting element (31, 82) is fitted on the insert part (30, 67, 81) in the insert part socket (22) and runs through the gas channel (21, 71, 86a).

3. A holder device according to claim 2, in which the insert part (30, 67, 81) is axially movable in the insert part socket (22) and can be fixed in predetermined position by a positioning element (36, 61, 89), so that the supporting end (31a, 82a) of the supporting element (31, 82) can be recessed into the head part (20, 70, 86).

4. A holder device according to claim 1, in which the distance of the supporting end (31a, 82a) beyond the surface of the support block (10, 60, 90) is selected in the range from 1 to 5 mm.

5. A holder device according to any of the preceding claims 2 to 4, in which the head part (20) is provided with a shield (25) against icing.

6. A holder device according to any of the preceding claims 2 to 5, in which a temperature control device (63, 84) is provided in the head part (70, 86).

7. A holder device according to any of the preceding claims, in which a temperature sensor (64) and/or a humidity sensor is fitted at the outlet end (21a, 71a, 86b) of the gas channel (21, 71, 86a).

8. A holder device according to any of the preceding claims, in which the supporting element (31, 82) is a retaining capillary (31) or a loop holder (82).

9. A holder device according to any of the preceding claims 2 to 8, in which the head part (20, 70, 86) is freely rotatable relative to the insert part (30, 67, 81).

10. A holder device according to any of the preceding claims 2 to 9, in which gas feed into the gas channel (71, 86a) is effected through branches which are integrated in the head part (70, 86).

11. Use of a holder device according to any of claims 1 to 10 as a sample holder for a protein crystal in structural analytic investigations, for fast freezing protein crystals or for crystal transformation of protein crystals.

## Revendications

1. Dispositif de maintien pour un échantillon en forme de particule, avec un bloc support (10, 60, 80) pour un élément porteur (31, 82), qui possède une extrémité porteuse libre (31a, 82a) pour l'échantillon, le dispositif de maintien convenant pour disposer l'échantillon dans un instrument de mesure pour les analyses de structure et l'élément porteur (31, 82) étant fixé au bloc support (10, 60, 80) de telle sorte que l'extrémité porteuse (31a, 82a) saille du bloc support (10, 60, 80), **caractérisé en ce que** le bloc support (10) contient au moins un canal de gaz intégral (21, 71, 86a) avec une embouchure (21a, 71a, 86b), laquelle est dirigée sur l'extrémité porteuse (31a, 82a) de l'élément porteur (31, 82), de telle sorte que dans l'état dans lequel le canal de gaz est traversé par le gaz, l'extrémité porteuse (31a, 82a) se trouve dans une atmosphère locale d'un gaz traversant le canal de gaz (21, 71, 86a).

2. Dispositif de maintien selon la revendication 1, pour lequel le bloc support (10, 60, 80) comprend une pièce de tête (20, 70, 86) et une pièce insérée (30, 67, 81), le canal de gaz (21, 71, 86a) traversant en ligne droite la pièce de tête (20, 70, 86) d'une prise de pièce insérée (22) à l'embouchure (21a, 71a, 86b) et l'élément porteur (31, 82) est disposé sur la pièce insérée (30, 67, 81) dans la prise de pièce insérée (22) et passe à travers le canal de gaz (21, 71, 86a).

3. Dispositif de maintien selon la revendication 2, pour lequel la pièce insérée (30, 67, 81) est mobile axialement dans la prise de pièce insérée (22) et peut être fixée dans une position prédéfinie par un élément de fixation (36, 61, 89), de telle sorte que l'extrémité porteuse (31a, 82a) de l'élément porteur (31, 82) soit escamotable dans la pièce de tête (20, 70, 86).

4. Dispositif de maintien selon la revendication 1, pour lequel la distance de l'extrémité porteuse (31a, 82a) au-dessus de la surface du bloc support (10, 60, 80) est choisie dans l'intervalle de 1 à 5 mm.

5. Dispositif de maintien selon l'une des revendications 2 à 4 ci-avant, pour lequel un écran de givrage (25) est prévu sur la pièce de tête (20).

6. Dispositif de maintien selon l'une des revendications 2 à 5 ci-avant, pour lequel un dispositif de thermorégulation (63, 84) est prévu dans la pièce de tête (70, 86).

7. Dispositif de maintien selon l'une des revendications ci-avant, pour lequel à l'embouchure (21a, 71a, 86b) du canal de gaz (21, 71, 86a) est disposé un capteur de température (64) et/ou un capteur hygrométrique.

8. Dispositif de maintien selon l'une des revendications ci-avant, pour lequel l'élément porteur (31, 82) est un capillaire de maintien (31) ou une fixation à boucle (82).

9. Dispositif de maintien selon l'une des revendications 2 à 8 ci-avant, pour lequel la pièce de tête (20, 70, 86) peut être tournée librement par rapport à la pièce insérée (30, 67, 81).

10. Dispositif de maintien selon l'une des revendications 2 à 9 ci-avant, pour lequel une arrivée de gaz s'effectue dans le canal de gaz (71, 86a) par des embranchements, lesquels sont intégrés dans la pièce de tête (70, 86).

11. Utilisation d'un dispositif de maintien selon l'une des revendications 1 à 10 comme support d'échantillon pour un cristal de protéine lors d'études comportant des analyses de structure, pour la congélation ultrarapide de cristaux de protéine ou pour la transformation cristalline de cristaux de protéine.
